(19) Europäisches Patentamt / European Patent Office / Office européen des brevets

(11) **EP 4 002 650 A1**

(12) **EUROPEAN PATENT APPLICATION**
published in accordance with Art. 153(4) EPC

(43) Veröffentlichungstag:
**25.05.2022 Patentblatt 2022/21**

(21) Anmeldenummer: **19937577.5**

(22) Anmeldetag: **17.07.2019**

(51) Internationale Patentklassifikation (IPC):
*H02K 3/487* (2006.01)     *H02K 3/493* (2006.01)

(52) Gemeinsame Patentklassifikation (CPC):
**H02K 3/487; H02K 3/493**

(86) Internationale Anmeldenummer:
**PCT/CN2019/096352**

(87) Internationale Veröffentlichungsnummer:
**WO 2021/007804 (21.01.2021 Gazette 2021/03)**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Schaeffler Technologies AG & Co. KG 91074 Herzogenaurach (DE)**

(72) Erfinder:
• **LIU, Lei**
  **hangzhou, Jiangsu 213032 (CN)**
• **GONG, Yu**
  **Shanghai 200129 (CN)**

(54) **STATORANORDNUNG UND STATOR FÜR EINEN MOTOR**

(57)    Die vorliegende Erfindung stellt eine Statoranordnung und einen Stator für einen Motor bereit. Bei der Statoranordnung wird auf eine Schwalbenschwanznut verzichtet, die nach dem Stand der Technik am Zahnabschnitt eines Eisenkerns gebildet ist, stattdessen wird direkt in einer Leiternut ein Nutkeil mit einer Breite eingebaut, die ungefähr der Breite der Leiternut entspricht, wobei der Nutkeil in drei Richtungen, in Umfangsrichtung, radial und axial, durch das Zusammenwirken eines Nutkeilpressrings, eines Leiters und einer Seitenwand der Leiternut begrenzt und der Nutkeil gleichzeitig in der Lage ist, ein Herausfallen des Leiters aus der Leiternut zu verhindern. Im Vergleich zu der Statoranordnung für einen Motor nach dem Stand der Technik verringert die beschriebene Nutkeil-Befestigungskonstruktion die Breite des Zahnabschnitts des Eisenkerns als solches nicht, und somit erreicht der Magnetfluss des Zahnabschnitts des Eisenkerns nicht ohne Weiteres eine Übersättigung, wodurch verhindert wird, dass die Nutkeil-Befestigungskonstruktion eine nachteilige Wirkung auf die Leistung des Stators ausübt. Darüber hinaus kann bei der Statoranordnung für einen Motor gemäß der vorliegenden Erfindung, wenn der Nutkeil eingebaut wird, der Nutkeil nicht nur in die Leiternut entlang der axialen Richtung eingesetzt und eingebaut werden, sondern kann auch in die Leiternut entlang der radialen Richtung eingesetzt und eingebaut werden, und somit ist die Einbauweise flexibel, was die Einbaueffizienz verbessern kann.

FIG. 2a

**Beschreibung**

Technisches Gebiet

Die vorliegende Erfindung betrifft das Gebiet der Motoren, und insbesondere eine Statoranordnung für einen Motor, und einen Stator, der die Statoranordnung für einen Motor umfasst.

Hintergrund

Gegenwärtig werden im Bereich der Motoren für Fahrzeuge mit neuartigem Energieantrieb zunehmend höhere Anforderungen an Leistungen, wie niedrige Oberschwingungsanteile, geringe Geräuschentwicklung und hohe Effizienz gestellt. Die Verwendung eines Nutkeils, insbesondere eines magnetischen Nutkeils, kann die vorstehenden Leistungen verbessern. Jedoch hat die Nutkeil-Befestigungskonstruktion des Stators in einem herkömmlichen Motor einen Einfluss auf die vorstehenden Leistungen.

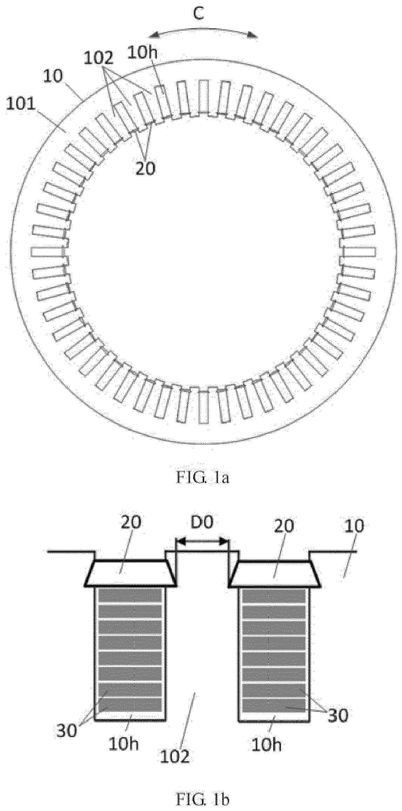

FIG. 1a ist ein schematisches Konstruktionsdiagramm, das eine Statoranordnung für einen Motor zeigt, und FIG. 1b zeigt eine Nutkeil-Befestigungskonstruktion der Statoranordnung in FIG. 1a. Wie in FIG. 1a gezeigt, umfasst die Statoranordnung für einen Motor insbesondere einen Eisenkern 10 und Leiter 30 und Nutkeile 20, die an dem Eisenkern 10 eingebaut sind. Der Eisenkern 10 umfasst einen zylindrischen Körperabschnitt des Eisenkerns 101 und eine Vielzahl von Zahnabschnitten des Eisenkerns 102, die von dem Körperabschnitt des Eisenkerns 101 zu einer inneren radialen Seite vorstehen und gleichmäßig in einer Umfangsrichtung C verteilt sind. Eine Leiternut 10h ist zwischen jeweils zwei Zahnabschnitten des Eisenkerns 102, die in der Umfangsrichtung C benachbart sind, gebildet. Wie in FIG. 1b gezeigt, sind ein Nutkeil 20 und eine Vielzahl von Leitern 30 in jeder Leiternut 10h eingebaut, und der Nutkeil 20 befindet sich an inneren radialen Seiten der Leiter 30, wodurch verhindert wird, dass die Leiter 30 aus der Leiternut 10h herausfallen.

Eine Nutkeil-Befestigungskonstruktion der vorstehenden Statoranordnung für einen Motor umfasst eine Schwalbenschwanznut, die sich entlang einer axialen Richtung erstreckt und an Umfangsseitenwänden von zwei benachbarten Zahnabschnitten des Eisenkerns 102 gebildet ist, die einander zugewandt sind, und der Nutkeil 20 weist eine Form auf, die jener der Schwalbenschwanznut entspricht, sodass der Nutkeil 20 in der Lage ist, in die Schwalbenschwanznut entlang der axialen Richtung eingesetzt zu werden, um zwischen jeweils zwei benachbarten Zahnabschnitten des Eisenkerns 102 befestigt zu werden. Als solches macht die Schwalbenschwanznut einerseits die Breite jedes Zahnabschnitts des Eisenkerns 102 gleich einer tatsächlichen Breite D0 des Zahnabschnitts des Eisenkerns, der in FIG. 1b gezeigt ist, was die Breite des Zahnabschnitts des Eisenkerns 102 tatsächlich verringert, wodurch die magnetische Sättigung des Zahnabschnitts des Eisenkerns 102 erhöht und die Leistung des Motors verringert wird; andererseits muss der Nutkeil 20 während des Einbauvorgangs zwischen jeweils zwei benachbarten Zahnabschnitten des Eisenkerns 102 in die Leiternut 10h (d. h. in die Schwalbenschwanznut eingesetzt) entlang der axialen Richtung eingesetzt werden, wodurch der Einbauvorgang kompliziert und ineffizient wird.

Kurzdarstellung

Die vorliegende Erfindung wurde im Hinblick auf die vorstehend beschriebenen Mängel des Standes der Technik erarbeitet. Eine Aufgabe der vorliegenden Erfindung besteht darin, eine Statoranordnung für einen Motor mit einer Nutkeil-Befestigungskonstruktion bereitzustellen, die keine nachteilige Wirkung auf die Leistung eines Stators hat. Eine weitere Aufgabe der vorliegenden Erfindung besteht darin, einen Stator bereitzustellen, der die vorstehende Statoranordnung für einen Motor umfasst.

Um die vorstehend genannten Aufgaben zu erfüllen, werden die folgenden technischen Schemata angewendet.

Die vorliegende Erfindung stellt eine Statoranordnung für einen Motor bereit, umfassend

einen Eisenkern, der einen zylindrischen Körperabschnitt des Eisenkerns und eine Vielzahl von Zahnabschnitten des Eisenkerns umfasst, die von dem Körperabschnitt des Eisenkerns zu einer inneren radialen Seite vorstehen und entlang einer Umfangsrichtung angeordnet sind, eine Leiternut, die sich entlang einer radialen Richtung erstreckt und zwischen jeweils zwei Zahnabschnitten des Eisenkerns, die in der Umfangsrichtung benachbart sind, gebildet ist;
Leiter, wobei eine Vielzahl der Leiter in jeder der Leiternuten aufgenommen und eingebaut ist und entlang der radialen Richtung angeordnet ist;
Nutkeile, die in jeder der Leiternuten aufgenommen und eingebaut sind, wodurch ermöglicht wird, dass sich die Nutkeile an den inneren radialen Seiten der Vielzahl von Leitern in jeder der Leiternuten befinden; und
Nutkeilpressringe, die fest an den Zahnabschnitten des Eisenkerns auf der inneren radialen Seite eingebaut sind und mit einem Teil jedes der Nutkeile von der inneren radialen Seite in der radialen Richtung presseingepasst sind, wobei die Leiter und die Nutkeilpressringe damit die Nutkeile in der radialen Richtung begrenzen.

Vorzugsweise sind zwei axiale Enden der Zahnabschnitte des Eisenkerns jeweils mit einer abgestuften Konstruktion gebildet, die zu einer äußeren radialen Seite hin konkav ist, und die Nutkeile sind jeweils mit einer Kerbe gebildet, die der abgestuften Konstruktion entspricht, und jede der abgestuften Konstruktionen und die entsprechende Kerbe sind mit einem Nutkeilpressring versehen, wodurch die zwei Nutkeilpressringe die Nutkeile in axialer Richtung begrenzen können.

Besonders bevorzugt sind die Nutkeilpressringe fest an den Zahnabschnitten des Eisenkerns in einer Presspassung eingebaut.

Besonders bevorzugt umfasst der Eisenkern eine Vielzahl von Statorlamellenblechen und zwei Statorendpressplatten, die in der axialen Richtung aneinander ausgerichtet zusammengeschichtet sind, wobei die zwei Statorendpressplatten an zwei Enden des Eisenkerns angeordnet sind und die Nutkeilpressringe durch Drücken gegen die Statorendpressplatten von der inneren radialen Seite fest an den Statorendpressplatten eingebaut sind.

Besonders bevorzugt umfasst jede der Statorendpressplatten einen ringförmigen Endpressplattenkörper und eine Vielzahl von Endpressplattenzähnen, die von dem Endpressplattenkörper zur inneren radialen Seite vorsteht und entlang der Umfangsrichtung angeordnet ist,

umfasst jedes der Statorlamellenbleche einen ringförmigen Lamellenblechkörper und eine Vielzahl von Lamellenblechzähnen, die von dem Lamellenblechkörper zur inneren radialen Seite vorsteht und entlang der Umfangsrichtung angeordnet ist, ist der Körperabschnitt des Eisenkerns durch Zusammenschichten des Endpressplattenkörpers und des Lamellenblechkörpers in der axialen Richtung gebildet und sind die Zahnabschnitte des Eisenkerns durch Zusammenschichten der Endpressplattenzähne und der Lamellenblechzähne in der axialen Richtung gebildet.

Besonders bevorzugt liegt ein inneres radiales Ende jedes der Endpressplattenzähne näher an der äußeren radialen Seite als das innere radiale Ende des entsprechenden Lamellenblechzahns, sodass die Endpressplattenzähne und die Lamellenblechzähne die abgestuften Konstruktionen der Zahnabschnitte des Eisenkerns für den Einbau der Nutkeilpressringe bilden.

Besonders bevorzugt ist, wenn ein Innendurchmesser der Statorendpressplatte D1 ist und ein Innendurchmesser des Statorlamellenblechs D2 ist und ein Außendurchmesser des Nutkeilpressrings d1 ist und ein Innendurchmesser des Nutkeilpressrings d2 ist, Folgendes erfüllt: h=(D1-D2)/2, d1=D1 und d2=D2. Besonders bevorzugt ist eine radiale innere Umfangsfläche des Nutkeilpressrings ungefähr bündig mit einer inneren radialen Endfläche der Lamellenblechzähne; und/oder ist eine axiale Dicke des Nutkeilpressrings ungefähr gleich derjenigen der Statorendpressplatten.

Die vorliegende Erfindung stellt ferner einen Stator bereit, der mindestens eine Statoranordnung für einen Motor gemäß einem der vorhergehenden technischen Schemata umfasst.

Besonders bevorzugt umfasst der Stator eine Vielzahl von Statoranordnungen für einen Motor und die Vielzahl von Statoranordnungen für einen Motor ist in der axialen Richtung auf koaxiale Weise in Reihe verbunden.

Durch die Übernahme der vorstehenden technischen Schemata stellt die vorliegende Erfindung eine neuartige Statoranordnung für einen Motor und einen Stator bereit, der die Statoranordnung für einen Motor umfasst. Bei der Statoranordnung wird auf eine Schwalbenschwanznut, die im Stand der Technik am Zahnabschnitt eines Eisenkerns gebildet ist, verzichtet, stattdessen wird direkt in einer Leiternut ein Nutkeil mit einer Breite, die ungefähr der Breite der Leiternut entspricht, eingebaut, wobei der Nutkeil in drei Richtungen, in Umfangsrichtung, radial und axial, durch das Zusammenwirken eines Nutkeilpressrings, eines Leiters und einer Seitenwand der Leiternut begrenzt ist, und gleichzeitig ist der Nutkeil in der Lage, ein Herausfallen des Leiters aus der Leiternut zu verhindern. Im Vergleich zu der Statoranordnung für einen Motor nach dem Stand der Technik verringert die beschriebene Nutkeil-Befestigungskonstruktion die Breite des Zahnabschnitts des Eisenkerns als solches nicht, und somit erreicht der Magnetfluss des Zahnabschnitts des Eisenkerns nicht ohne Weiteres eine Übersättigung, wodurch verhindert wird, dass die Nutkeil-Befestigungskonstruktion eine nachteilige Wirkung auf die Leistung des Stators ausübt. Darüber hinaus kann bei der Statoranordnung für einen Motor gemäß der vorliegenden Erfindung, wenn der Nutkeil eingebaut wird, der Nutkeil nicht nur in die Leiternut entlang der axialen Richtung eingesetzt und eingebaut werden, sondern kann auch in die Leiternut entlang der radialen Richtung eingesetzt und eingebaut werden, und somit ist der Einbaumodus flexibel, was die Einbaueffizienz verbessern kann.

Kurzbeschreibung der Zeichnungen

FIG. 1a ist ein schematisches Konstruktionsdiagramm, das eine Statoranordnung für einen Motor zeigt; und FIG. 1b ist ein teilweise vergrößertes schematisches Diagramm, das die Statoranordnung für einen Motor in FIG. 1a zeigt.
FIG. 2a ist ein schematisches Konstruktionsdiagramm, das eine Statoranordnung für einen Motor gemäß der vorliegenden Erfindung zeigt; FIG. 2b ist ein teilweises Konstruktionsdiagramm, das die Statoranordnung für einen Motor in FIG. 2a zeigt; und FIG. 2c ist eine vergrößerte Ansicht, die eine Teilkonstruktion der Statoranordnung für einen Motor in FIG. 2a zeigt.
FIG. 3a ist ein schematisches Diagramm, das eine Statorendpressplatte der Statoranordnung für einen Motor in FIG. 2a zeigt; FIG. 3b ist ein schematisches Diagramm, das ein Statorlamellenblech der Statoranordnung für einen Motor in FIG. 2a zeigt; und FIG.

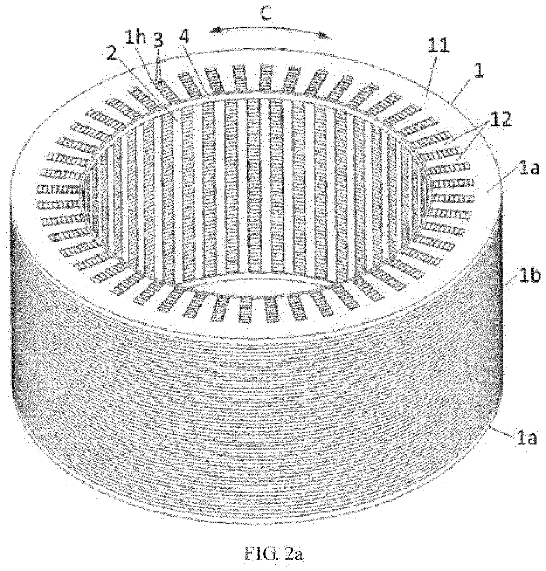

3c ist ein schematisches Diagramm, das einen Nutkeilpressring der Statoranordnung für einen Motor in FIG. 2a zeigt.

Ausführliche Beschreibung

Beispielhafte Implementierungen der vorliegenden Erfindung werden nachstehend unter Bezugnahme auf die Zeichnungen beschrieben. Es sollte beachtet werden, dass sich "axiale Richtung", "radiale Richtung" und "Umfangsrichtung", wie hierin beschrieben, auf eine axiale Richtung, eine radiale Richtung bzw. eine Umfangsrichtung einer Statoranordnung (Eisenkern) für einen Motor beziehen, sofern nicht anders angegeben.

Wie in FIG. 2a bis FIG. 2c gezeigt, umfasst die Statoranordnung für einen Motor gemäß der vorliegenden Erfindung einen Eisenkern 1, eine Vielzahl von Nutkeilen 2, eine Vielzahl von Leitern 3 und zwei Nutkeilpressringe 4, die alle zusammengebaut sind.

Insbesondere umfasst bei dieser Implementierung der Eisenkern 1 einen zylindrischen Körperabschnitt des Eisenkerns 11 und eine Vielzahl von Zahnabschnitten des Eisenkerns 12, die von dem Körperabschnitt des Eisenkerns 11 zu einer inneren radialen Seite vorstehen, und die Zahnabschnitte des Eisenkerns 12 weisen die gleiche Form und Abmessung auf. In einer Umfangsrichtung C ist zwischen jeweils zwei benachbarten Zahnabschnitten des Eisenkerns 12 eine sich in radialer Richtung erstreckende Leiternut 1h gebildet. Da die Vielzahl von Zahnabschnitten des Eisenkerns 12 in der Umfangsrichtung C gleichmäßig verteilt ist, ist auch die Vielzahl von Leiternuten 1h in Umfangsrichtung C gleichmäßig verteilt.

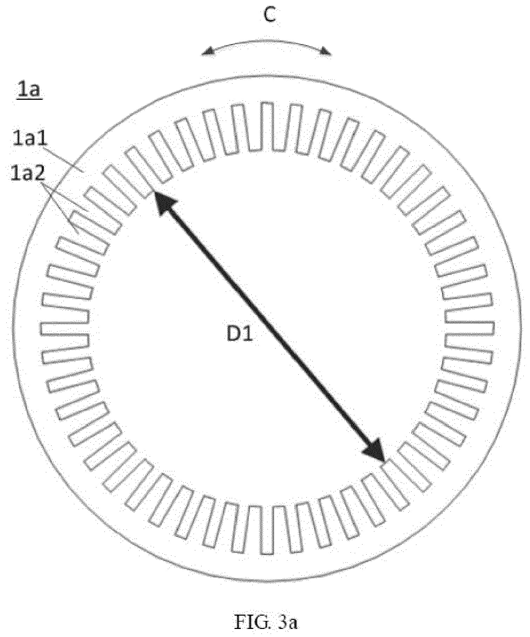

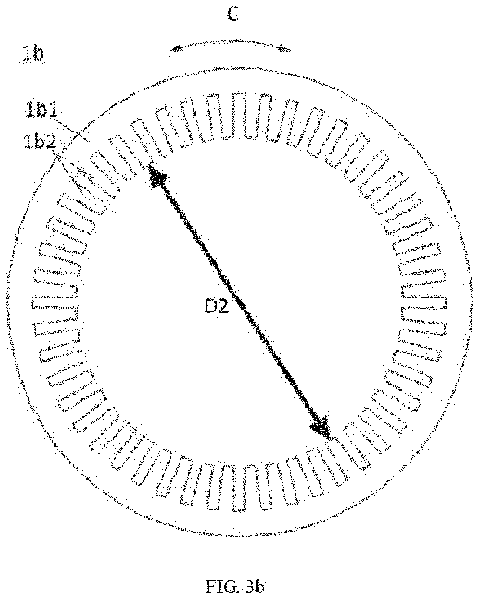

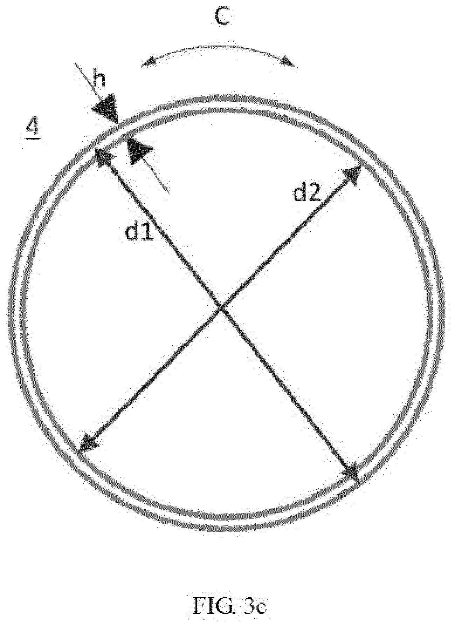

Der Eisenkern 1 umfasst zwei Statorendpressplatten 1a (wie in FIG. 3a gezeigt) und eine Vielzahl von Statorlamellenblechen 1b (wie in FIG. 3b gezeigt), die in einer axialen Richtung zusammengeschichtet sind. Aus der axialen Richtung betrachtet sind die Statorendpressplatten 1a und die Statorlamellenbleche 1b ungefähr aneinander ausgerichtet. In der axialen Richtung ist die Vielzahl von Statorlamellenblechen 1b zwischen den zwei Statorendpressplatten 1a angeordnet, sodass die zwei Statorendpressplatten 1a an zwei axialen Enden des Eisenkerns 1 angeordnet sind. Wie in FIG. 3a gezeigt, bestehen die Statorendpressplatten 1a aus Metallmaterialien, wie Siliziumstahl. Jede der Statorendpressplatten 1a umfasst einen ringförmigen Endpressplattenkörper 1a1 und eine Vielzahl von Endpressplattenzähnen 1a2, die von dem Endpressplattenkörper 1a1 zur inneren radialen Seite vorsteht, und die Vielzahl von Endpressplattenzähnen 1a2 weist die gleiche Form und Abmessung auf und ist gleichmäßig entlang der Umfangsrichtung C angeordnet. Wie in FIG. 3b gezeigt, bestehen die Statorlamellenbleche 1b vorzugsweise aus Siliziumstahl. Jedes der Statorlamellenbleche 1b umfasst einen ringförmigen Lamellenblechkörper 1b1 und eine Vielzahl von Lamellenblechzähnen 1b2, die von dem Lamellenblechkörper 1b1 zur inneren radialen Seite vorsteht, und die Vielzahl von Lamellenblechzähnen 1b2 weist die gleiche Form und Abmessung auf und ist gleichmäßig entlang der Umfangsrichtung C angeordnet. Ferner sind der Endpressplattenkörper 1a1 und der Lamellenblechkörper 1b1 sowohl in Form als auch Abmessungen identisch. Die Anzahl der Endpressplattenzähne 1a2 und die Anzahl der Lamellenblechzähne 1b2 sind gleich; und hinsichtlich Form und Abmessung unterscheiden sich die Endpressplattenzähne 1a2 und die Lamellenblechzähne 1b2 nur in den radialen Abmessungen.

Als solche werden der Endpressplattenkörper 1a1 und der Lamellenblechkörper 1b1 geschichtet und in der axialen Richtung aneinander befestigt, während sie aneinander ausgerichtet sind, um den Körperabschnitt des Eisenkerns 11 zu bilden, und die Endpressplattenzähne 1a2 und die Lamellenblechzähne 1b2 sind geschichtet und in der axialen Richtung aneinander befestigt, um die Zahnabschnitte des Eisenkerns 12 zu bilden. Wenn die Endpressplattenzähne 1a2 und die Lamellenblechzähne 1b2 in der axialen Richtung zusammengeschichtet werden, ist aufgrund der unterschiedlichen radialen Abmessungen der Endpressplattenzähne 1a2 und der Lamellenblechzähne 1b2 ein inneres radiales Ende von jedem der Endpressplattenzähne 1a2 näher an der äußeren radialen Seite als ein inneres radiales Ende des entsprechenden Lamellenblechzahns 1b2, sodass die Endpressplattenzähne 1a2 und die Lamellenblechzähne 1b2 abgestufte Konstruktionen für den Einbau der Nutkeilpressringe 4 bilden.

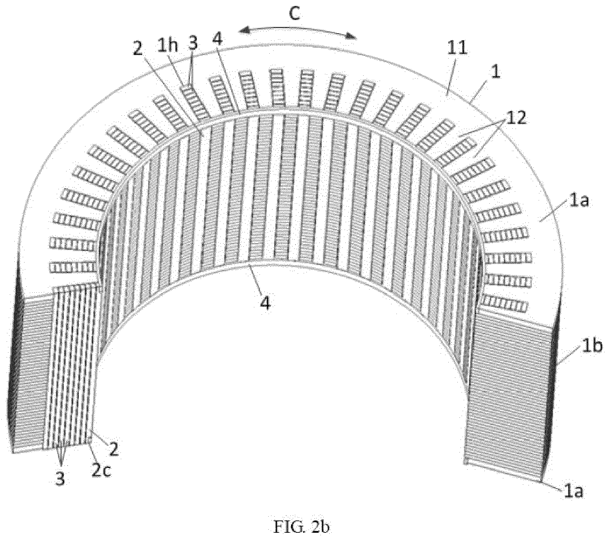

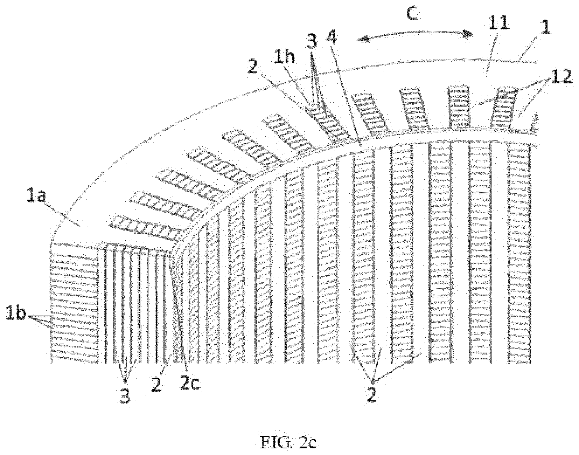

Bei dieser Ausführung wird in jeder Leiternut 1h ein Nutkeil 2 aufgenommen und eingebaut. In jeder Leiternut 1h ist der entsprechende Nutkeil 2 an den inneren radialen Seiten einer Vielzahl von Leitern 3 angeordnet, sodass der Nutkeil 2 die entsprechenden Leiter 3 an den inneren radialen Seiten begrenzen kann. Eine axiale Länge jedes Nutkeils 2 ist gleich der des Eisenkerns 1, wodurch ermöglicht wird, dass zwei axiale Enden des Nutkeils 2 an zwei axialen Enden des Eisenkerns 1 ausgerichtet sind. Wie in FIG. 2b und FIG. 2c gezeigt, sind zwei axiale Enden jedes Nutkeils 2 jeweils mit einer Kerbe 2c gebildet, die der vorstehenden abgestuften Konstruktion des Zahnabschnitts des Eisenkerns 12 entspricht, und die Kerbe 2c wird auch für den Einbau des Nutkeilpressrings 4 verwendet.

Bei dieser Ausführung wird eine Vielzahl von Leitern 3 in jeder Leiternut 1h aufgenommen und eingebaut. In jeder Leiternut 1h ist eine Vielzahl von Leitern 3 in der radialen Richtung durch Aneinanderstoßen angeordnet. Zum Bilden der Leiternut 1h verwendete Seitenwände können die Leiter 3 auf der äußeren radialen Seite und zwei Umfangsseiten begrenzen. Eine axiale Länge jedes Leiters 3 ist gleich der des Eisenkerns 1, wodurch ermöglicht wird, dass zwei axiale Enden des Leiters 3 an zwei axialen Enden des Eisenkerns 1 ausgerichtet sind.

Bei dieser Ausführung sind zwei Nutkeilpressringe 4 vorgesehen, und jeder der Nutkeilpressringe 4 ist fest an der abgestuften Konstruktion des Zahnabschnitts des Eisenkerns 12 und der Kerbe 2c des entsprechenden Nutkeils 2 von der inneren radialen Seite eingebaut, sodass die Nutkeilpressringe 4 und die Nutkeile 2 in der radialen Richtung und der axialen Richtung konstruktiv presseingepasst sind. Seitenwände, die zum Bilden der Leiternut 1h verwendet werden, können als solche den Nutkeil 2 von zwei Umfangsseiten begrenzen, die Leiter 3 können den Nutkeil 2 auf der äußeren radialen Seite begrenzen und die zwei Nutkeilpressringe 4 können nicht nur den Nutkeil 2 von der inneren radialen Seite, sondern auch den Nutkeil 2 von jeweils zwei axialen Seiten begrenzen. Daher ist der Nutkeil 2 in der Umfangsrichtung, radialen Richtung und axialen Richtung begrenzt.

Vorzugsweise werden die zwei Nutkeilpressringe 4 fest an den Zahnabschnitten des Eisenkerns 12 durch Drücken gegen innere radiale Seitenflächen der Endpressplattenzähne 1a2 der Statorendpressplatte 1a von der inneren radialen Seite und in einer Presspassung eingebaut.

Um sicherzustellen, dass die Abmessung des Nutkeilpressrings 4 den Betrieb und den Zusammenbau des Stators nicht beeinträchtigt, wird, wie in FIG. 3a bis FIG. 3c gezeigt, angenommen, dass ein Innendurchmesser der Statorendpressplatte 1a, der durch die inneren radialen Seitenflächen der Endpressplattenzähne 1a2 definiert ist, D1 ist und ein Innendurchmesser des Statorlamellenblechs 1b, der durch die inneren radialen Seitenflächen der Lamellenblechzähne 1b2 definiert ist, D2 ist, ein Außendurchmesser des Nutkeilpressrings 4 d1 ist, ein Innendurchmesser des Nutkeilpressrings 4 d2 ist und eine radiale Dicke des Nutkeilpressrings 4 h ist, wodurch Folgendes erfüllt ist: h=(D1-D2)/2, d1=D1 und d2=D2. In dem Fall, dass die vorstehenden Bedingungen erfüllt sind, wird die Presspassung zwischen dem Nutkeilpressring 4 und dem Zahnabschnitt des Eisenkerns 12 unter Verwendung von Spiel sichergestellt.

Noch bevorzugter h = (D1-D2)/2. Nachdem der Nutkeilpressring 4 fest an der abgestuften Konstruktion des Zahnabschnitts des Eisenkerns 12 und der Kerbe 2c des Nutkeils 2 eingebaut ist, ist eine radiale Innenumfangsfläche des Nutkeilpressrings 4 als solche ungefähr bündig mit einer inneren radialen Endfläche des Statorlamellenblechs 1b (ungefähr auf derselben zylindrischen Fläche). Außerdem ist eine axiale Dicke des Nutkeilpressrings 4 ungefähr gleich derjenigen der Statorendpressplatte 1a. Nachdem der Nutkeilpressring 4 fest an der abgestuften Konstruktion des Zahnabschnitts des Eisenkerns 12 und der Kerbe 2c des Nutkeils 2 eingebaut ist, ist eine axiale Endfläche des Nutkeilpressrings 4 ungefähr bündig mit der der Statorendpressplatte 1a.

Ferner stellt die vorliegende Erfindung auch einen Stator für einen Motor bereit, wobei der Stator mindestens eine Statoranordnung für einen Motor mit der vorstehenden Konstruktion umfasst. Wenn der Stator eine Vielzahl von Statoranordnungen für einen Motor umfasst, kann die Vielzahl von Statoranordnungen für einen Motor in der axialen Richtung auf koaxiale Weise in Reihe verbunden sein, sodass ein Stator mit einer vorbestimmten axialen Länge erhalten werden kann.

Selbstverständlich ist die vorliegende Erfindung nicht auf die vorstehend aufgeführten Ausführungen beschränkt, und Fachleute können verschiedene Modifikationen an den vorstehend aufgeführten Ausführungen der vorliegenden Erfindung angesichts der Lehre der vorliegenden Erfindung vornehmen, ohne vom Schutzumfang der vorliegenden Erfindung abzuweichen. Darüber hinaus ist auch Folgendes zu beachten:

(i) Obwohl in den vorstehenden spezifischen Ausführungen nicht explizit beschrieben, versteht es sich, dass der Nutkeil gemäß der vorliegenden Erfindung in der Leiternut entlang der axialen Richtung oder entlang der radialen Richtung eingesetzt werden kann. Auf diese Weise ist der Nutkeileinbaumodus flexibel, was den Einbau erleichtern und die Einbaueffizienz verbessern kann.

(ii) Obwohl in den vorstehenden spezifischen Ausführungen nicht explizit beschrieben, versteht es sich, dass die Breite des Nutkeils gleich oder geringfügig kleiner als die der Leiternut sein kann, sodass der Nutkeil in die Leiternut eingebaut werden kann. Außerdem unterscheidet sich das Material des Nutkeils von dem des Leiters. Darüber hinaus ist der Querschnitt des Nutkeils nicht auf eine Keilform beschränkt, sondern kann jede beliebige Form aufweisen, wie ein Rechteck.

(iii) Obwohl in den vorstehenden spezifischen Ausführungen nicht explizit beschrieben, versteht es sich, dass, wenn der Stator eine Vielzahl von Statoranordnungen für einen Motor gemäß der vorliegenden Erfindung umfasst, ein Nutkeilpressring und eine Statorendpressplatte zwischen jeweils zwei benachbarten Statoranordnungen gemeinsam genutzt werden können.

(iv) In der vorliegenden Erfindung kann die Statorendpressplatte aus dem gleichen Material wie das Statorlamellenblech bestehen. Als solche kann die Statorendpressplatte gebildet werden, indem die radialen Abmessungen der Lamellenblechzähne einer Vielzahl von Statorlamellenblechen geändert werden und dann die Vielzahl von Statorlamellenbleche zusammengeschichtet wird.

LISTE DER BEZUGSZAHLEN

| 10 | Eisenkern |
| 101 | Körperabschnitt des Eisenkerns |
| 102 | Zahnabschnitt des Eisenkerns |
| 10h | Leiternut |
| 20 | Nutkeil |
| 30 | Leiter |
| D0 | Tatsächliche Breite des Zahnabschnitts des Eisenkerns |
| 1 | Eisenkern |

11     Körperabschnitt des Eisenkerns
12     Zahnabschnitt des Eisenkerns
1h     Leiternut
1a     Statorendpressplatte
1a1    Endpressplattenkörper
1a2    Endpressplattenzahn
1b     Statorlamellenblech
1b1    Lamellenblechkörper
1b2    Lamellenblechzahn
2      Nutkeil
2c     Kerbe
3      Leiter
4      Nutkeilpressring
d1     Außendurchmesser des Nutkeilpressrings
d2     Innendurchmesser des Nutkeilpressrings
D1     Innendurchmesser der Statorendpressplatte
D2     Innendurchmesser des Statorlamellenblechs
h      Radiale Dicke des Nutkeilpressrings
C      Umfangsrichtung

## Patentansprüche

1. Statoranordnung für einen Motor, umfassend

    einen Eisenkern (1), der einen zylindrischen Körperabschnitt des Eisenkerns (11) und eine Vielzahl von Zahnabschnitten des Eisenkerns (12) umfasst, die von dem Körperabschnitt des Eisenkerns (11) zu einer inneren radialen Seite vorstehen und entlang einer Umfangsrichtung (C) angeordnet sind, eine Leiternut (1h), die sich entlang einer radialen Richtung erstreckt und zwischen jeweils zwei Zahnabschnitten des Eisenkerns (12) gebildet ist, die in der Umfangsrichtung (C) benachbart sind;
    Leiter (3), wobei eine Vielzahl der Leiter (3) in jeder der Leiternuten (1h) aufgenommen und eingebaut ist und entlang der radialen Richtung angeordnet ist; Nutkeile (2), die in jeder der Leiternuten (1h) aufgenommen und eingebaut sind, wodurch ermöglicht wird, dass sich die Nutkeile (2) an den inneren radialen Seiten der Vielzahl von Leitern (3) in jeder der Leiternuten (1h) befinden; und
    Nutkeilpressringe (4), die fest an den Zahnabschnitten des Eisenkerns (12) auf der inneren radialen Seite eingebaut sind und mit einem Teil jedes der Nutkeile (2) von der inneren radialen Seite in der radialen Richtung presseingepasst sind, wobei die Leiter (3) und die Nutkeilpressringe (4) damit die Nutkeile (2) in der radialen Richtung begrenzen.

2. Statoranordnung für einen Motor nach Anspruch 1, wobei zwei axiale Enden der Zahnabschnitte des Eisenkerns (12) jeweils mit einer abgestuften Konstruktion gebildet sind, die zu einer äußeren radialen Seite hin konkav ist, und die Nutkeile (2) jeweils mit einer Kerbe (2c) gebildet sind, die der abgestuften Konstruktion entspricht, und jede der abgestuften Konstruktionen und die entsprechende Kerbe (2c) mit einem Nutkeilpressring (4) versehen sind, wodurch die zwei Nutkeilpressringe (4) die Nutkeile (2) in axialer Richtung begrenzen können.

3. Statoranordnung für einen Motor nach Anspruch 1 oder 2, wobei die Nutkeilpressringe (4) fest an den Zahnabschnitten des Eisenkerns (12) in einer Presspassung eingebaut sind.

4. Statoranordnung für einen Motor nach einem der Ansprüche 1 bis 3, wobei der Eisenkern (1) eine Vielzahl von Statorlamellenblechen (1b) und zwei Statorendpressplatten (1a) umfasst, die in der axialen Richtung aneinander ausgerichtet zusammengeschichtet sind, wobei sich die zwei Statorendpressplatten (1a) an zwei Enden des Eisenkerns (1) befinden und die Nutkeilpressringe (4) durch Drücken gegen die Statorendpressplatten (1a) von der inneren radialen Seite fest an den Statorendpressplatten (1a) eingebaut sind.

5. Statoranordnung für einen Motor nach Anspruch 4, wobei

    jede der Statorendpressplatten (1a) einen ringförmigen Endpressplattenkörper (1a1) und eine Vielzahl von Endpressplattenzähnen (1a2) umfasst, die von dem Endpressplattenkörper (1a1) zur inneren radialen Seite vorstehen und entlang der Umfangsrichtung (C) angeordnet sind, jedes der Statorlamellenbleche (1b) einen ringförmigen Lamellenblechkörper (1b1) und eine Vielzahl von Lamellenblechzähnen (1b2) umfasst, die von dem Lamellenblechkörper (1b1) zur inneren radialen Seite vorstehen und entlang der Umfangsrichtung (C) angeordnet sind, der Körperabschnitt des Eisenkerns (11) durch Zusammenschichten des Endpressplattenkörpers (1a1) und des Lamellenblechkörpers (1b1) in der axialen Richtung gebildet ist und die Zahnabschnitte des Eisenkerns (12) durch Zusammenschichten der Endpressplattenzähne (1a2) und der Lamellenblechzähne (1b2) in der axialen Richtung gebildet sind.

6. Statoranordnung für einen Motor nach Anspruch 4, wobei ein inneres radiales Ende jedes der Endpressplattenzähne (1a2) näher an der äußeren radialen Seite liegt als das innere radiale Ende des entsprechenden Lamellenblechzahns (1b2), sodass die Endpressplattenzähne (1a2) und die Lamellenblechzähne (1b2) die abgestufte Konstruktion der Zahnabschnitte des Eisenkerns (12) für den Einbau der Nutkeilpressringe (4) bilden.

**7.** Statoranordnung für einen Motor nach Anspruch 6, wobei, wenn ein Innendurchmesser der Statorendpressplatte (1a) D1 ist und ein Innendurchmesser der Statorlamellenbleche (1b) D2 ist und ein Außendurchmesser des Nutkeilspressrings (4) d1 ist und ein Innendurchmesser des Nutkeilpressrings (4) d2 ist, Folgendes erfüllt ist:

$$h = (D1 - D2)/2, d1 = D1$$

und

$$d2 = D2.$$

**8.** Statoranordnung für einen Motor nach Anspruch 7, wobei eine radiale innere Umfangsfläche des Nutkeilpressrings (4) ungefähr bündig mit einer inneren radialen Endfläche der Lamellenblechzähne (1b2) ist; und/oder eine axiale Dicke des Nutkeilpressrings (4) ungefähr gleich derjenigen der Statorendpressplatten (1a) ist.

**9.** Stator, umfassend mindestens eine Statoranordnung für einen Motor nach einem der Ansprüche 1 bis 8.

**10.** Stator nach Anspruch 9, wobei der Stator eine Vielzahl von Statoranordnungen für einen Motor umfasst und die Vielzahl von Statoranordnungen für einen Motor in der axialen Richtung auf koaxiale Weise in Reihe verbunden ist.

FIG. 1a

FIG. 1b

FIG. 2a

FIG. 2b

FIG. 2c

FIG. 3a

FIG. 3b

FIG. 3c

**INTERNATIONAL SEARCH REPORT**

| International application No. |
| --- |
| **PCT/CN2019/096352** |

**A. CLASSIFICATION OF SUBJECT MATTER**

H02K 3/487(2006.01)i;  H02K 3/493(2006.01)i

According to International Patent Classification (IPC) or to both national classification and IPC

**B. FIELDS SEARCHED**

Minimum documentation searched (classification system followed by classification symbols)

H02K

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT: 舍弗勒技术股份两合公司, 电机, 定子, 转子, 槽楔, 封槽, 压环, 压板, 径向, 定位, 限位, 台阶, 凹槽, stator, rotor, slot, wedge, press+, clamp+, radial

**C. DOCUMENTS CONSIDERED TO BE RELEVANT**

| Category* | Citation of document, with indication, where appropriate, of the relevant passages | Relevant to claim No. |
| --- | --- | --- |
| X | CN 105529845 A (TOYOTA MOTOR CORPORATION) 27 April 2016 (2016-04-27) description, paragraphs [0021]-[0028], figures 1-10 | 1-10 |
| X | CN 202363995 U (SUZHOU KINGCLEAN AUTO MOTOR CO., LTD.) 01 August 2012 (2012-08-01) description, paragraphs [0020]-[0023], and figures 1-5 | 1-10 |
| A | GB 2509738 A (ROLLS ROYCE PLC) 16 July 2014 (2014-07-16) entire document | 1-10 |

☐ Further documents are listed in the continuation of Box C.   ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 March 2020** | **07 April 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

INTERNATIONAL SEARCH REPORT

Information on patent family members

International application No.

**PCT/CN2019/096352**

| Patent document cited in search report | | | Publication date (day/month/year) | Patent family member(s) | | | Publication date (day/month/year) |
|---|---|---|---|---|---|---|---|
| CN | 105529845 | A | 27 April 2016 | JP | 2016082721 | A | 16 May 2016 |
| | | | | EP | 3010118 | A3 | 03 August 2016 |
| | | | | JP | 6269435 | B2 | 31 January 2018 |
| | | | | US | 2016111922 | A1 | 21 April 2016 |
| | | | | EP | 3010118 | A2 | 20 April 2016 |
| | | | | CN | 105529845 | B | 11 September 2018 |
| CN | 202363995 | U | 01 August 2012 | None | | | |
| GB | 2509738 | A | 16 July 2014 | None | | | |

Form PCT/ISA/210 (patent family annex) (January 2015)